# EUROPEAN PATENT APPLICATION

(11) **EP 0 999 444 A2**
(43) Date of publication of application: **10.05.2000**
(21) Application number: 99301848.0
(22) Date of filing: 11.03.1999
(51) Int. Cl.: G01N 27/90

(54) **An object inspection unit and a method of inspecting an object**

(30) Priority: 06.11.1998 GB 9824326
(71) Applicant: Frank's Tubulars International Limited, Altens, Aberdeen AB12 3LY (GB)
(72) Inventor: Robb, Eden Swaily, Bridge of Don, Aberdeen AB22 8WR (GB)
(74) Representative: Pattullo, Norman

(57) **Abstract**

An object inspection unit, which is preferably mobile, is described as comprising an electro-magnetic tubular inspection means, which is preferably coupled to the device, and which may be in the form of a moveable sensor head. The electro-magnetic inspection means is typically capable of inspecting the integrity of an object, such as a tubular used in downhole applications such as drillpipe, tubing and casing. A rotation mechanism, preferably in the form of a roller unit, is also coupled to the device and which can provide relative rotation between an object to be inspected and electro-magnetic tubular inspection means. Transportation means may also be provided to permit the device to be moved, and which may be in the form of attachment points to which ropes and the like may be coupled to permit the device to be lifted by, for example, a crane.

## Description

The present invention relates to an object inspection unit, and a method of inspecting an object, and more particularly but not exclusively, to a tubular inspection unit and a method of inspecting a tubular such as, for example, lengths of Oilfield and Country Tubular Goods (OCTG) standard tubulars used in downhole applications such as drillpipe, tubing and casing. However, it should be noted that the present invention also relates to an inspection unit for an object which can be used in other industries, for instance, aeronautical, aerospace, automotive etc., which may require high quality inspection.

Typically, tubulars such as drillpipe, tubing or casing used in drilling for oil, gas or water, require to be inspected at regular intervals to ensure that any defects in the OCTG pipe or drillpipe such as longitudinal or transverse defects or deviations such as the thinning of the drillpipe, tubing or casing wall thickness and scarring to the drillpipe wall are within industry standards.

Conventionally, inspection of tubulars is carried out either by conducting Ultrasonic Inspection (UI) and/or Electro-Magnetic Inspection (EMI), where existing EMI units are ineffective at inspecting chrome metal objects, to the present day standards, with greater than approximately 13% by weight of chrome content as the material is difficult to magnetise, and is also limited to inspecting the metal object over a thickness of 1/2 inch. Also, existing EMI units are only capable of effectively detecting longitudinally arranged defects in the pipe, with respect to the longitudinal axis of the pipe, and hence is ineffective of detecting transversely arranged defects in the pipe.

Further, under the new American and European quality standards, it will be required that any tubular used in the oil and gas industry which is over 8 mm thick must be inspected by UI due to the inability of conventional EMI units to accurately and consistently detect to depths greater than this.

A conventional EMI unit comprises a flux ring which is in the form of an annular ring. The flux ring comprises at least a pair of transducers mounted thereon and separated by 180 degrees, and at least a pair of electric coils mounted thereon and separated by 180 degrees from each other and spaced by 90 degrees from the transducers. The purpose of the flux ring is to create a conduit for the magnetic field created by the energised electric coils. In use of the conventional EMI unit, the flux ring is rotated around the tubular to be inspected at between approximately 60 and 300 RPM whilst the tubular is pushed longitudinally through the rotating flux ring, without the tubular being rotated. This conventional EMI unit is limited, unless the unit has been especially built or modified for a one-off application, with respect to the largest size of tubular it can inspect, by the diameter of the flux ring to a maximum diameter of tubular of thirteen and three quarters of an inch.

A number of slip rings are required in order for the electric supply to be provided to the coils, and also to provide the output of the transducers for analysis of possible defects.

However, the existence of the flux ring in this. conventional unit creates eddy currents in the path of travel of the flux, and the eddy currents create unwanted noise and interference in the output signals of the transducers, especially in the detection of inner diameter flaws.

Further, the fact that the slip rings are present means that there is a large amount of additional background noise present in the output signals of the transducers, thus requiring complex filter systems to remove the noise. There is further difficulty in the centralisation of the tubular which can result in uninspected areas of the tubular.

The reader is directed to the applicant's co-pending European Patent Application No. 98307209.1.

According to a first aspect of the present invention, there is provided an object inspection device comprising:-
means to move the object; and
an electromagnetic inspection means.

According to a second aspect of the present invention, there is provided a method of inspecting an object, the method comprising:-
providing an object inspection device having an electromagnetic inspection means, and
operating a means associated with the object inspection device to provide movement to the object, the electromagnetic inspection means permitting analysis of defects of the object.

The device may be mobile, or alternatively, the device may be fixed or immobile.

The device may include means to rotate the object, and the electromagnetic inspection means is preferably stationary in the circular plane with respect to the longitudinal axis of the object.

The means to rotate the object is preferably a rotation mechanism for providing rotation to the object to be inspected.

Typically, the device is in the absence of an ultrasonic tubular inspection means.

It will be apparent to the reader that, apart from an ultrasonic inspection means, any other inspection means could be incorporated in addition to the electromagnetic inspection means.

Preferably, the rotation mechanism is coupled to the object inspection device. Typically, the object is an any object, such as a component, product, commodity or the like, which is capable of being rotated. Typically, at least the portion of the object to be inspected is circular in cross section.

Preferably, the electromagnetic inspection means is operable, to inspect the object, around the longitudinal axis of the object as it is rotated.

The electromagnetic inspection means typically comprises at least one electromagnetic sensor and at least two magnets, which are preferably electromagnetic coils. The coils are typically spaced less than 180 degrees apart around the radius subscribed by the rotating object, and the electromagnetic sensor is typically located substantially equi-distant between the coils. Preferably, the coils are spaced approximately 120 degrees apart.

The device may be in the form of a container which, may be moveable by means of a vehicle which may be an articulated truck. The device may further comprise a frame. The electromagnetic inspection means may be coupled to the frame, and the electromagnetic inspection means may be movably coupled to the frame.

The transportation means may comprise attachment points to which ropes and the like may be coupled to permit the frame to be lifted by a lifting means which may be a crane or the like. Alternatively, or in addition, the transportation means may comprise wheels to permit the frame to be moved by a vehicle.

Alternatively, the electromagnetic inspection means may be in the form of a hand moveable unit. Alternatively, the device may be in a non-movable form, and may be secured to the ground in, for example a factory unit, a works yard or the like.

Preferably, the object inspection device further comprises a support member onto which the tubular is placed prior to being inspected.

Preferably, the rotation mechanism is engageable with the object to provide rotation thereto. Typically, the object inspection device further comprises a displacement mechanism for providing relative movement between the object and the support member, such that during rotation of the object by the rotation mechanism, the object is typically supported by the rotation mechanism and the object is unsupported by the support member.

Typically, the electromagnetic inspection means is moveable substantially along the length of the object.

Typically, the object inspection device further comprises a support arm onto which the object is placed prior to being supported by the support member. Preferably, the support arm extends from the frame and more preferably, the support arm extends substantially horizontally from the frame. Preferably, the support arm is hinged to the frame and is moveable from an unextended and unoperating configuration to an extended and operating configuration.

Preferably, the object inspection device further comprises an object movement mechanism which provides for movement of the object along its longitudinal axis. Preferably, the object movement mechanism is capable of moving the object to and from a position in which one of the ends of the object is in contact with a rotatable plate.

Typically, the object movement mechanism is moved into and out of engagement with the object by a displacement mechanism, and typically, when the object is engaged with the object movement mechanism, the object is unsupported by the support member.

Preferably, the object rotation mechanism is moved into and out of engagement with the object by a displacement mechanism which is preferably the same displacement mechanism as that of the object movement mechanism.

Preferably, the displacement mechanism includes an elongate member comprising upsets thereon such that when the elongate member is moved, the upsets engage either of the object rotation mechanism and the object movement mechanism to move the respective mechanism into engagement with the object, as desired.

Preferably, the object is a tubular, which may be an OCTG product.

An embodiment of an object inspection device will now be described, by way of example only, with reference to the accompanying drawings, in which:-
Fig. 1 is a side view of a mobile tubular inspection device, in accordance with the present invention, in a transportation configuration;
Fig. 2 is an end view of the device of Fig. 1;
Fig. 3 is a plan view of the device of Fig. 1 whilst it is being transformed into an in use configuration;
Fig. 4 is a plan view of the floor of the device of Fig. 1;
Fig. 5 is an end view of the device of Fig. 1 in an unused configuration;
Fig. 6 is a side view of an electromagnetic inspection sensor head during inspection of a tubular by the mobile tubular inspection device of Fig.1 in an in use configuration;
Fig. 7 is a side view of a cam plate of the device of Fig. 1;
Fig. 8 is an end view of a pipe rotator of the device of Fig. 1;
Fig. 9 is a side view of the pipe rotator of Fig. 8;
Fig. 10 is an end view of a cam bar support of the device of Fig. 1;
Fig. 11 is an end view of a pipe longitudinal roller of the device of Fig. 1;
Fig. 12 is a side view of the pipe longitudinal roller of Fig. 11;
Fig. 13 is an end view of the electromagnetic inspection sensor head of Fig. 6;
Fig. 14 is an end view of the electromagnetic inspection head of Figs. 6 and 13 in more detail;
Fig. 15 is a schematic perspective view of the electromagnetic sensor head of Figs. 6, 13 and 14;
Fig. 16 is an end view of the electromagnetic inspection sensor head of Figs. 6, 13, 14 and 15 in isolation;
Fig. 17 is a plotter print out of the results of an electromagnetic inspection of a pipe using the prior art and conventional EMI unit described in the introduction; and
Fig. 18 is a plotter print out of the results of an electromagnetic inspection of a pipe using the device of the present invention.

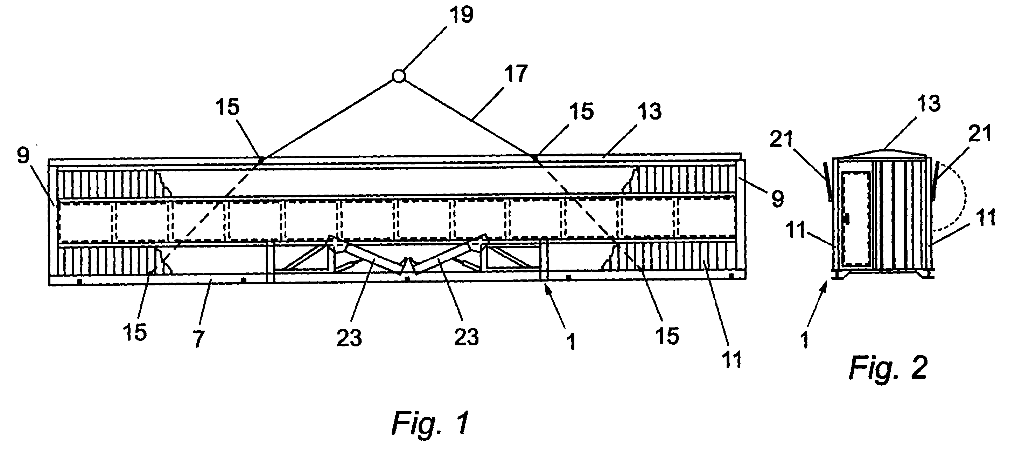

Fig. 1 shows a mobile pipe inspection unit 1, in accordance with the present invention, where the unit 1 has an outer steel frame 3 formed from a number of steel beams 5. The frame 3 has a floor section 7, two end sections 9, two side walls 11 and a roof 13. Four rope attachment points 15 are provided on both side walls 11 of the unit 1, where the two lower attachment points 15 are secured to the floor section 7 and the two upper attachment points 15 are secured to the roof 13. A wire rope 17 is secured to the attachment points 15 and a hook 19 is formed on the wire rope 17 such that the unit 1 can be lifted by crane (not shown). The unit 1 would normally be placed on the ground in use, or could be secured on a lorry trailer in use or only whilst being transported.

Shutters 21 are formed in the side walls 11, and can be lifted upwards (as shown in Fig. 2) to allow access to the interior of the unit 1.

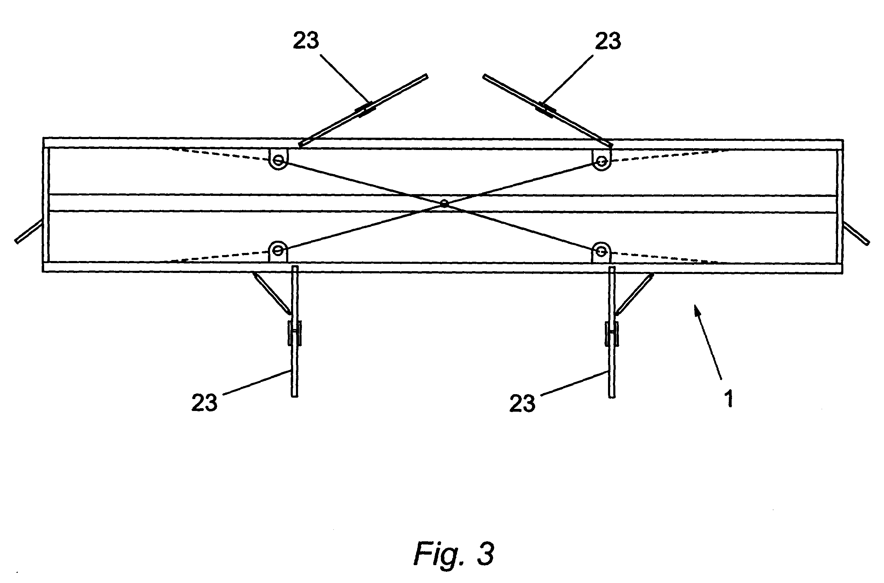

Fig. 3 shows that two pipe-collecting arms 23 are provided on both side walls 11 and are stowed flush to the side walls 11 during transportation. However, in use of the unit 1, the pipe-collecting arms 23 are rotated about their hinges to extend perpendicularly to, and horizontally from, the side walls 11. The unit 1 is approximately 48 feet long in order to receive the longest length of OCTG product used, and is approximately 8 feet high and approximately 6 feet wide.

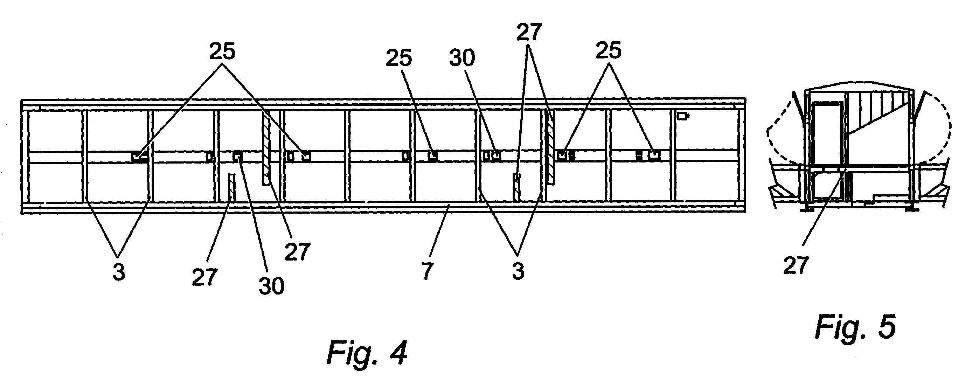

Fig. 4 shows the floor section 7 where there are a number of rotator roller units 25 spaced along the length of the central axis of the unit 1. There are also two pipe movement rollers 30 spaced apart on the central axis of the unit 1. Pipe support beams 27 are arranged parallel to the extended pipe collecting arms 23.

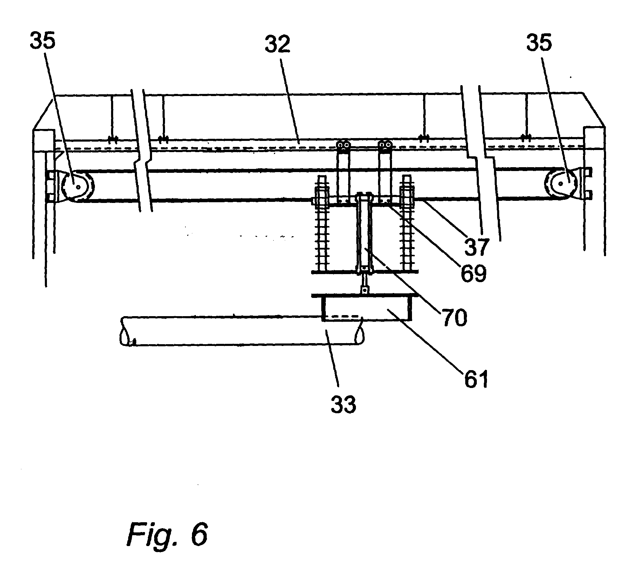

Fig. 6 shows an electromagnetic sensor head inspection unit 61 in close proximity to an OCTG product, which may be a drill pipe 33, which is being inspected. An electromagnetic inspection system in the form of an electromagnetic head 63 is mounted on the sensor head 61, and will be described subsequently in more detail.

The sensor head 61 is suspended or slung from a track 32, which runs the length of the unit 1, and is moveable along the length of the track 32 by operation of a pulley 35 and rope 37 arrangement, where the rope 37 is coupled to a basket 69. The sensor head 61 can be lifted or lowered with respect to the basket 69 by means of a pair of air cylinders 70. Therefore, the basket 69 will move due to any longitudinal movement of the rope 37 in the direction along the length of the track 32. Thus, the sensor head inspection unit 61 is moveable in either axial direction with respect to the tubular 33 by moving the rope 37, and is also moveable in either radial direction of the tubular 33 by operation of the pair of pistons 70.

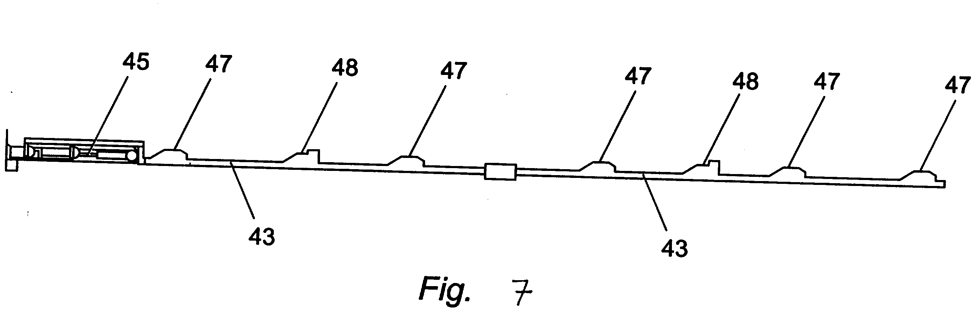

A cam plate 43 is shown in Fig. 7 and is located along the central axis on the floor section 7. The cam plate 43 is moveable along the central axis by means of a hydraulic cylinder which is connected to one end of the cam plate 43. The cam plate 43 comprises five upwardly projecting upsets 47 which are spaced along its length. There are also two upwardly projecting upsets 48 which are spaced apart. The cam plate 43 is arranged on the floor 7 such that when it is moved in one direction, the upsets 47 engage a lower face of the rotator roller units 25 and move them upwardly to engage the drill pipe 33. The upsets 48 are arranged such that when the cam plate 43 is moved in the other direction they engage the pipe movement rollers 30 by moving them upwardly.

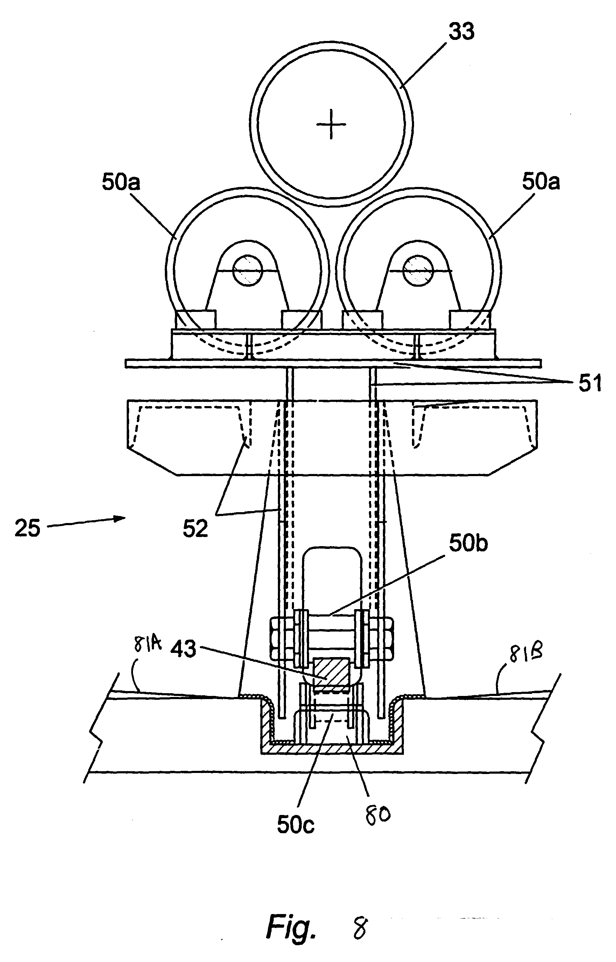

Fig. 8 shows a rotator roller unit 25, where the drillpipe 33 is shown, in phantom, as being engaged by the rotator roller unit 25, which comprises two pipe rollers 50A which are coupled to an upper member 51 which is moveable with respect to a lower member 52.

It should be noted that at least one of the pipe rollers 50A of at least one of the rotator roller units 25 is driven by a hydraulic motor drive (not shown). A free wheeling roller 50B is mounted at the lower end of the upper member 51, where this free wheeling roller's 50B axle 54 is engaged in a slot 55 cut out of the lower member 52. The single free wheeling roller 50B is in contact with the upper face of the cam plate 43. Thus, when the cam plate 43 is moved such that the upset 47 is moved toward the rotator roller unit 25, the contact between the upset 47 and the roller 50B moves the upper member 51 upwards. Thus, the two rollers 50A engage with, and support, the OCTG product, which in this example is the drillpipe 33.

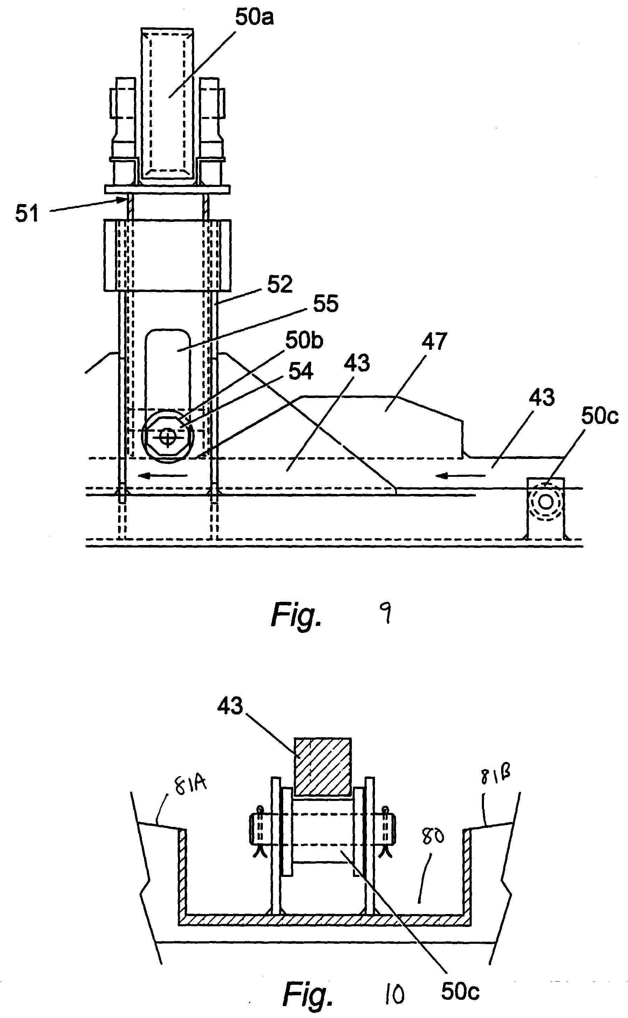

Fig. 10 shows that the cam plate 43 is itself supported, at spaced apart points along its length, by a free wheeling roller 50C arrangement.

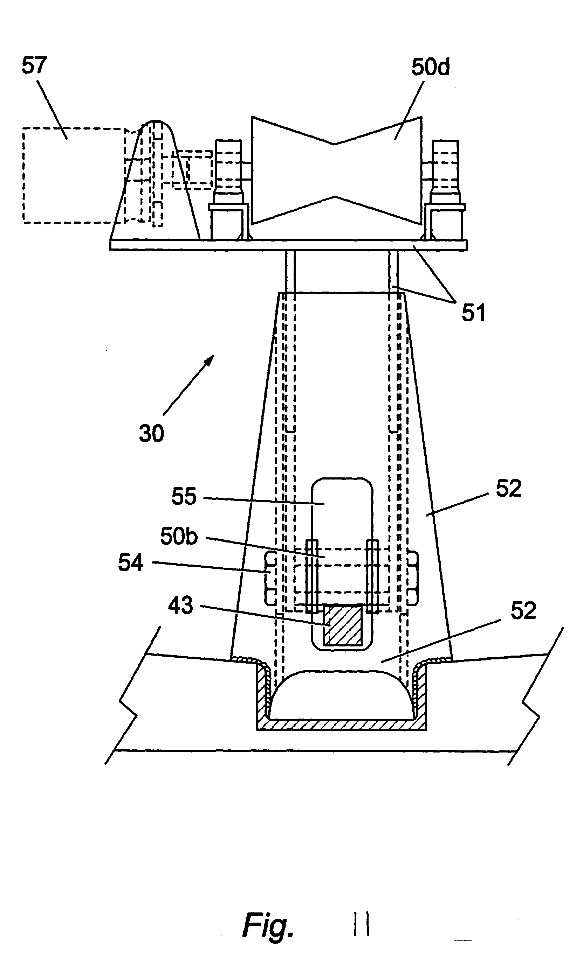

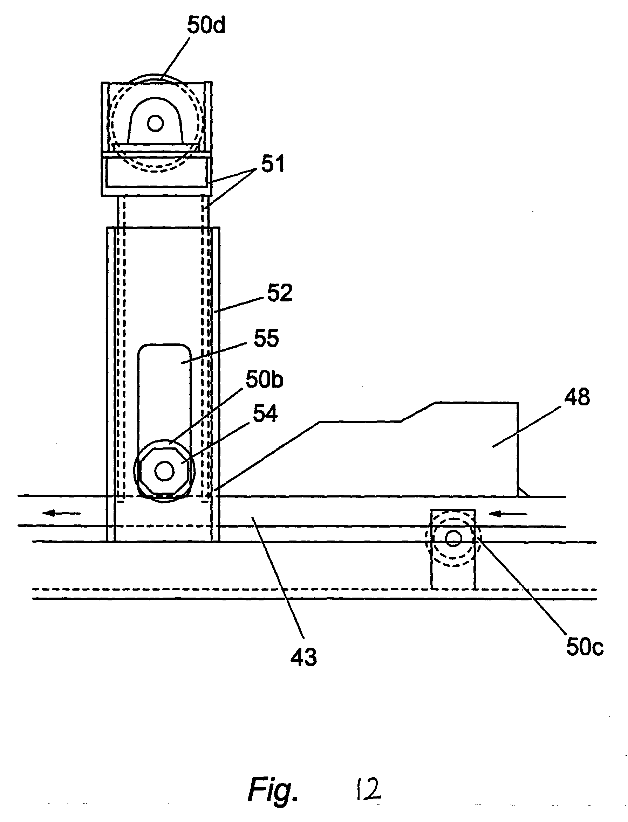

The pipe movement rollers 30 are shown in Figs. 11 and 12 as comprising a single roller 50D. However, the roller 50D is powered by a hydraulic motor drive 57. The pipe movement roller 30 is arranged in a similar fashion to the rotator roller units 25 in that they comprise an upper 51 and a lower 52 member, a free wheeling roller 50B, an axle 54 and a slot 55. Thus, when the cam plate 43 is moved such that the upset 48 is moved towards the pipe movement roller 30, the upper member 51, and thus the roller 50D is moved upwardly into engagement with the pipe 33. The hydraulic motor drive 57 can be operated to move the pipe 33 along its longitudinal axis.

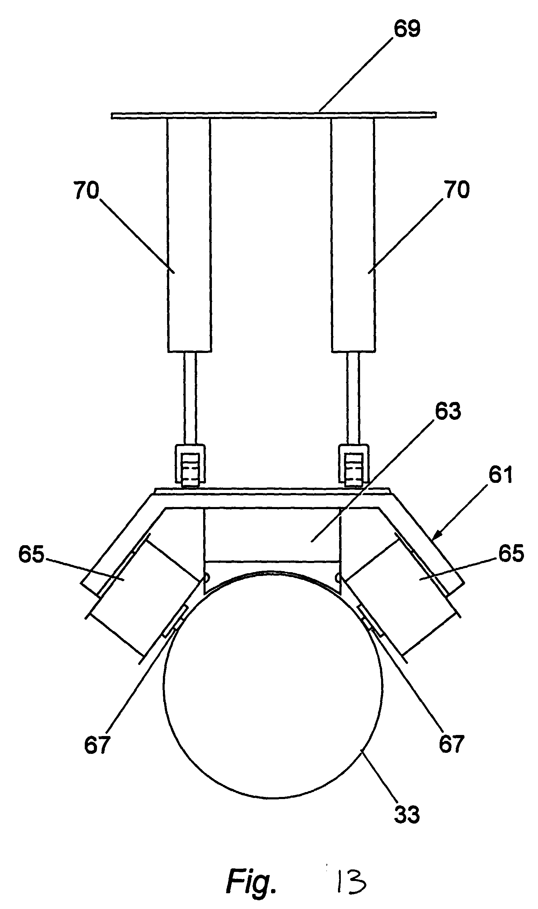

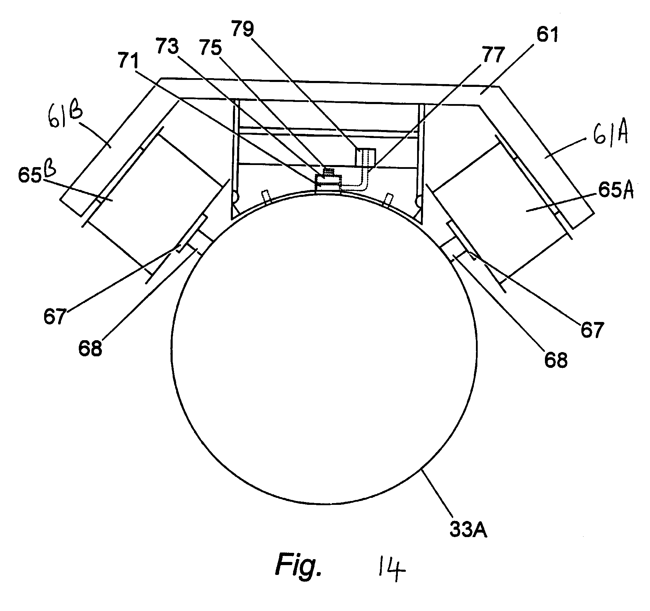

The sensor head inspection unit 61 is shown in more detail in Figs. 13 and 14, where it is shown to be inspecting the tubular 33. An electromagnetic inspection (EMI) head 63 is mounted on the underside of the sensor head inspection unit 61, where the lower surface of the EMI head 63 has a substantially curved profile, and preferably the curved profile has a radius which substantially matches the radius of the tubular 33. The EMI head 63 is preferably formed from a non-metallic material, and may be formed from a plastic material such as nylon. A selectively operable electromagnetic coil 65 is mounted on either side of the sensor head inspection unit 61, and each coil is provided with pins 67 which are intended to make contact with the outer surface of the tubular 33. Alternatively, and more preferably, an arrangement of ball bearings (not shown) can be provided instead of the pins 67. The arrangement of the coils 65 and the contact between the pins 67, or ball bearings, and the tubular 33 is preferably arranged such that the lowermost portion of the coil 65 is vertically higher than the centre longitudinal axis of the tubular 33. This provides the advantage that the coils 65 do not interfere with the pipe rollers 50A when the sensor head inspection unit 61 is moving along the length of the track 32.

As shown in Fig. 14, an extension arm 68 can be provided to extend the reach of the pin 67 so that the sensor head inspection unit 61 can be used to inspect tubulars having a smaller diameter than that shown in Fig. 13, where a smaller diameter tubular 33A is shown in Fig. 14.

Alternatively, where ball bearings are provided instead of the pins 67, the ball bearings are mounted upon the portion of the unit 61A, 61B which carry the coils 65A, 65B, and the ball bearings act between the unit 61A, 61B and the tubular 33, 33A. Additionally, where ball bearings are provided, the portions 61A, 61B are preferably pivotally coupled to the central portion or rest of the unit 61, such that the portions can be spread apart to accommodate larger diameter tubulars 33, or moved closer together to accommodate smaller diameter tubulars 33A.

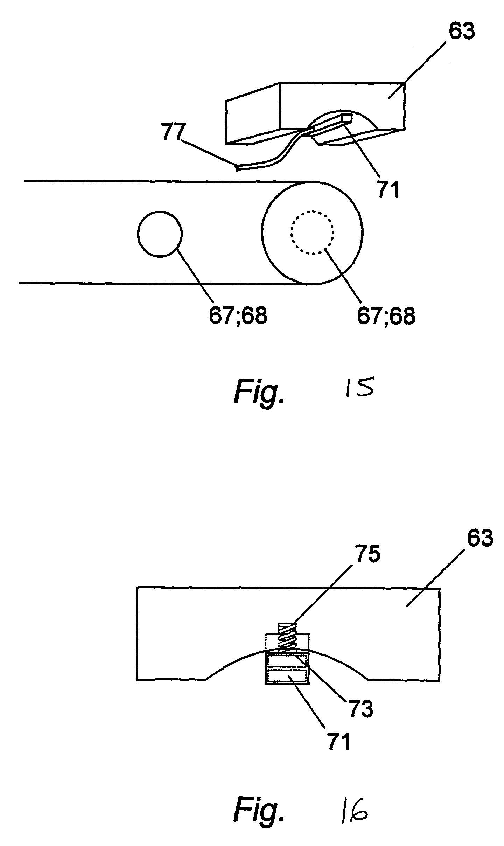

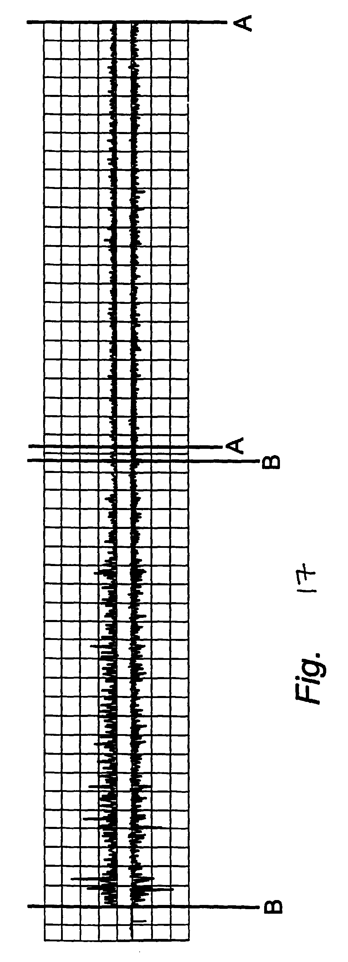

As shown in Fig. 14, and more clearly in Figs. 15 and 16, the EMI head 63 is provided with an EMI shoe 71, which incorporates 9 EMI sensors (not shown), and which is coupled to the lower surface of the EMI head 63 via a plate 73 which is preferably formed from a non-metallic material such as a plastic, which may be nylon. It should be noted that the EMI shoe could contain only one EMI sensor, or could contain any feasible number of EMI sensors. The plate 73, and thus the shoe 71 are biased downwardly toward the tubular 33 by a coil spring 75, and a shoe lead 77 is electrically coupled at one end to the EMI shoe 71. The other end of the shoe lead 77 is electrically coupled to a connection plug 79 which is further electrically coupled to an appropriate inspection monitoring apparatus, which will be detailed subsequently.

An example of a suitable EMI shoe is product no 20777-M which is offered by the Tubular Inspection Products company of the USA.

Thus, the sensor head inspection unit 61 is moved downwardly so that the pins 67 (or extension arms 68 if present), or ball bearings, are in contact with the tubular 33. The sensor head unit 61 is arranged so that the shoe 71 is also in engagement with the tubular 33 so that the EMI shoe 71 is pushed back into a rectangular recess formed on the lower surface of the substantially curved portion of the EMI head 63, so that the shoe 71 only protrudes by a relatively small margin, for instance ¾ inch.

Thus, when the electromagnetic coils 65 are energised, the EMI shoe 71 will pick up the electromagnetic field created by the coil 65, and thus, via the shoe lead 77, defects in the tubular 33 can be detected by the appropriate inspection monitoring apparatus.

The pins 67, or ball bearings, act to centralise the sensor head inspection unit 61 on the tubular 33, since the sensor head inspection unit 61 may move from side to side due to magnetism effects or vibration caused by the rotating tubular 33. However, the pins 67, or ball bearings, permit the sensor head inspection unit 61 to move axially with respect to the tubular 33. The pins, or ball bearings, further act to ensure that the coils 65A, 65B are stood off from the tubular 33 by a predetermined distance, which may be one half of an inch. This standing off of the coils 65A, 65B provides the advantage that a constant air gap is maintained between the coils 65A, 65B and the tubular 33, which provides an improved results output.

In use of the mobile pipe inspection unit 1, the unit 1 is transported to the environment in which the pipes requiring inspection are used. The pipe 33 is placed onto the pipe collecting arms 23 and is rolled into the interior of the unit 1, so that it comes to rest on the pipes support beams 27 over the central axis of the unit 1, and thus the pipe 33 is supported thereby. The cam plate 43 is moved in the direction such that the upsets 48 engage the pipe movement rollers 30. The hydraulic motor drive 57 can then be operated to move the pipe horizontally along its longitudinal axis until one end of the pipe makes contact with a free wheeling rotatable plate (not shown) which is rotatably coupled to one end section 9 of the frame 3. The free wheeling rotatable plate prevents the pipe 33 from moving outwith the frame 3 when the pipe 33 is rotated.

The cam plate 43 can then be moved in the other direction such that the pipe movement rollers 30 are disengaged from the pipe 33 and the rotator roller units 25 engage the pipe 33. After this has occurred, the rotator roller units 25 rotate the pipe 33, and tests have indicated that the best results for an EMI inspection may be achieved when the pipe 33 is rotated at approximately 60 RPM, although the unit 1 could be operated with the pipe 33 being rotated at up to 100 RPM or at even higher speeds of rotation. The unit 1 has an advantage that a variable speed of rotation can be provided to the pipe 33, simply by adjusting the output of the rotator roller units 25.

With the sensor head 61 located at a suitable height just above the pipe 33, the sensor head 61 can be moved along the length of the pipe 33, and thus an electromagnetic inspection of the pipe 33 is achieved.

However, it should be noted that the unit 1 could be modified so that the pipe 33 is moved longitudinally, whilst being rotated, whilst the sensor head 61 is conducting an EMI inspection of the pipe 33. Additionally, the sensor head 61 could be held in a stationary position, or be moved longitudinally in the same direction of the pipe 33, or in the opposite direction, at a slower or faster speed of movement than the pipe 33.

A water trough 80 is formed in the floor section 7 along the central axis beneath the cam plate 43. The two halves 81A, 81B of the floor section 7 either side of the water trough 80 are angled toward the trough 80, to provide for water, which may be sprayed onto the pipe 33 during use of the sensor head 61, to run off the floor section 7 into the trough 80, where it is collected. However, it should be noted that it is not essential that water is sprayed onto the pipe 33 before, or as it is inspected.

The output from the sensor head inspection unit 61 is transferred into a control cabin (not shown) which is located outwith the mobile tubular inspection unit 1, and which has appropriate inspection monitoring equipment in the form of analysis equipment, such as oscilloscopes, chart paper and/or computers to inspect any defects in the tubulars 33. A power pack cabin (not shown) is also located outwith the mobile tubular inspection unit 1 in order to provide power to the unit 1, and to the control cabin. The power pack unit required should be capable of delivering substantial power requirements, which may typically be in the region of 60 amps and 415 volts.

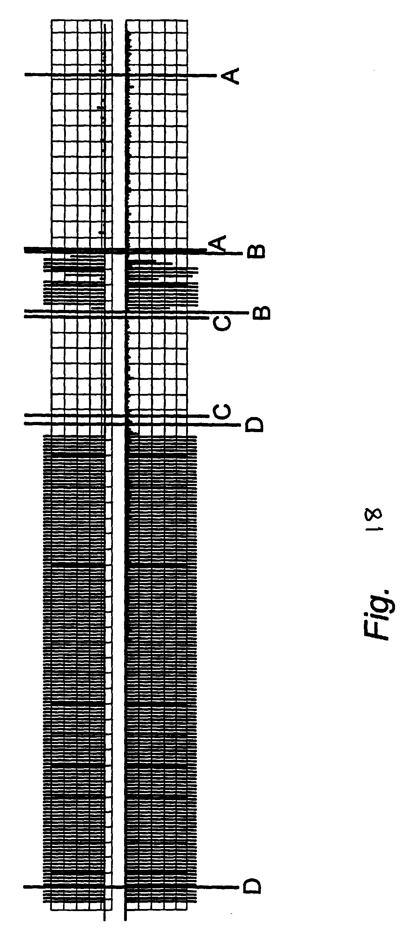

Fig. 17 shows the results, printed out by a plotter, of an electromagnetic inspection of the whole length of a pipe using the prior art conventional EMI unit described in the introduction. Section A-A of the graph of Fig.17 indicates that it is unlikely that there are any significant longitudinal defects in the first portion of the pipe, since there are no significant peaks in the trace output, although there are many small peaks which have been created by the high noise output of the prior art device. Section B-B of the graph of Fig. 17 indicates the presence of several possible longitudinal defects in the pipe at the locations with substantial peaks in the trace, although it is difficult to ascertain from the trace the exact scale of the problem, due to the significant level of the background noise. It should be noted that these results were produced from an inspection of a test pipe which has a number of created detects formed therein for test purposes, where the created defects are relatively large. Additionally, since the prior art device rotates the flux ring at a relatively slow speed, the transducers of the prior art unit usually only inspect the longitudinal defect once, particularly if the longitudinal defect is not of great length, since the pipe is pushed through the flux ring.

Fig. 18 is a plotter print out of the results of an electromagnetic inspection of a short section in length of a pipe 33 using the unit 1 and associated method in accordance with the present invention. Section A-A of the graph of Fig.18 shows the results received by the sensor head 61 as it moves longitudinally along the pipe 33, and it can be seen that there is virtually no unwanted noise introduced into the results.

Section B-B of the graph of Fig. 18 shows the presence of a single longitudinal (and intentionally) created test defect in the pipe 33, which is the same size of a defect as the created defects of the pipe inspected in Fig. 17. The reason that there are a number of peaks for this single created test defect is due to the relatively fast rotation of the pipe 33. Thus, the sensor head inspection unit 61 views the created defect a number of times as the pipe 33 rotates beneath it. The unit 1 has the further advantage that the noise level problem of the prior art unit does not occur, since no slip rings are required for the sensor head 61. Further, with the coils 65A, 65B being separated by 120 degrees, where the sensor head 61 is located equi-distant between them 65A, 65B, there is little or no creation of eddy currents in the flux path. This is mostly due to the fact that the magnetic flux path created by the sensor head 61 is substantially constant and undisturbed, in contrast to the prior art device.

It should be noted that the inventor predicts that the present invention may additionally be able to inspect defects to a greater depth than is possible with the prior art device and method. For the example of the unit 1 inspecting a pipe 33, it may be possible to detect defects up to three quarters of an inch deep in the pipe 33, or even greater. Further, it may even be possible to detect transverse defects of an object, if the defect lies up to 45 degrees from the longitudinal axis of the object as it is rotated.

Section C-C of the graph of Fig.18 shows the sensor head 61 having moved longitudinally past the created defect in the pipe 33, and again it can be seen that there is virtually no unwanted noise introduced into the results.

Section D-D of the graph of Fig. 18 shows the sensor head 61 having been moved back over the same created test defect in the pipe 33 as that inspected in section B-B of Fig. 18, and having been halted over the created test defect as the pipe 33 is continued to be rotated below the sensor head 61. This section D-D further shows the remarkable improvement achieved in reducing the noise to signal ratio of the unit 1 and method of the present invention.

A modification to the unit 1, within the scope of the present invention, may be the addition of a defect marking system (not shown), which comprises a paint spray device which could also be coupled to the output of the EMI shoe 71 and arranged such that the paint is sprayed onto the location of the pipe 33 where a defect is inspected.

Therefore, the mobile pipe inspection unit 1 provides the advantages that an electromagnetic inspection of a tubular 33 can be carried out, with remarkably improved results over the prior art devices. Further, the unit 1 provides greater time, commercial, and energy savings over the prior art devices, with reduced maintenance requirements.

However, it should be noted that the mobile pipe inspection unit 1 can also be used to inspect other objects which are capable of being rotated, and examples of these other products could include other objects used in the oil and gas industries, as well as objects used in industries other than oil and gas, for instance, aeronautical, aerospace, automotive etc., where these industries also typically utilise objects such as components and parts which require high quality inspection for defects in their structure. The unit 1 can therefore inspect non-tubular objects.

In addition, the sensor head 61 of the inspection unit 1 could be modified within the scope of the present invention to inspect pipes 33 with their longitudinal axis arranged vertically, which would enable an inspection to be conducted as OCTG products, for example, drill pipes 33 and/or other pipes 33 such as tubing and/or casing, were being removed from boreholes.

It should also be noted that the mobile pipe inspection unit 1 may be modified within the scope of the present invention to be a permanently fixed unit within, for example a factory or similar site, and thus the transportation means will not be required.

Further, it should be noted that the sensor head inspection unit 61 may not be suspended or slung from the track 32, but could be in the form of a hand held unit (not shown) which is held against and/or moved along the rotating object being inspected by the operator, and the rotation means for rotating the object could be much simplified. For instance, where the size and/or weight of the object permitted, the object could be rotated by hand.

Further modifications and improvements may be made without departing from the scope of the invention. For example, and to aid transportation of the mobile pipe inspection unit 1, a 5 foot long end section (not shown) could be telescopingly coupled to either end of a slightly shorter, for instance 40 foot, floor section 7 than that shown in the Figs. This would provide the advantage that the mobile pipe inspection unit 1 is more compact during transportation, and can be telescopingly lengthened, by extending the two end sections outwards, for it's in use configuration.

## Claims

1. An object inspection device comprising:-
means to move the object; and
an electromagnetic inspection means.

2. An object inspection device according to claim 1, wherein, the device includes means to rotate the object.

3. An object inspection device according to claim 2, wherein the electromagnetic inspection means is substantially stationary in the circular plane with respect to the longitudinal axis of the object.

4. An object inspection device according to either of claims 2 or 3, wherein the means to rotate the object is a rotation mechanism for providing rotation to the object to be inspected.

5. An object inspection device according to any preceding claim, wherein the device is in the absence of an ultrasonic tubular inspection means.

6. An object inspection device according to claim 4 or to claim 5 when dependent on claim 4, wherein the rotation mechanism is coupled to the object inspection device.

7. An object inspection device according to any preceding claim, wherein at least the portion of the object to be inspected is circular in cross section.

8. An object inspection device according to any preceding claim, wherein the electromagnetic inspection means is in the form of a hand moveable unit.

9. An object inspection device according to any of claims 1 to 7, wherein the device is in a non-movable form.

10. A method of inspecting an object, the method comprising:-
providing an object inspection device having an electromagnetic inspection means, and
operating a means associated with the object inspection device to provide movement to the object, the electromagnetic inspection means permitting analysis of defects of the object.
